# EUROPEAN PATENT SPECIFICATION

(11) **EP 2 290 406 B1**
(45) Date of publication and mention of the grant of the patent: **12.06.2013**
(21) Application number: 10170839.4
(22) Date of filing: 26.07.2010
(51) Int. Cl.: G01T 3/06, G01T 3/00

(54) **Apparatus and method for neutron detection with neutron-absorbing calorimetric gamma detectors**
Vorrichtung und Verfahren zur Neutronendetektion mit neutronenabsorbierenden kalorimetrischen Gamma-Detektoren
Appareil et procédé de détection de neutrons avec détecteurs de rayonnement gamma calorimétrique avec absorption de neutrons

(30) Priority: 27.07.2009 WO PCT/EP2009/059692
(43) Date of publication of application: 02.03.2011
(73) Proprietor: FLIR Radiation GmbH, 42653 Solingen (DE)
(72) Inventor: Pausch, Guntram, 01099, Dresden (DE); Herbach, Claus Michael, 01324 Dresden (DE); Stein, Jürgen, 42349, Wuppertal (DE)
(74) Representative: Schneider, Günther Martin

(56) References cited:
- EP-A2- 1 074 856
- WO-A2-2004/109331
- US-A1- 2007 272 874

## Description

The present invention relates to an apparatus for detecting neutron radiation, preferably thermal (slow) neutrons, utilizing a gamma ray scintillator for indirect detection.

In spite of a broad variety of methods and devices which are available for neutron detection, the common ³He tube is still dominating in most applications which require neutron counting with highest efficiency at lowest expense. However, a shortage of ³He is expected, so that there is a need for alternatives.

Such alternative detectors are known in the prior art. Knoll, Radiation Detection and Measurement, 3rd edition 2000, page 506, states that all common reactions used to detect neutrons are reactions with charged particle emission. More specifically, the possible reaction products used for detection are the recoil nuclei (mostly protons), tritons, alpha-particles and fission fragments. Nevertheless, gamma rays following a neutron capture reaction are used in some specialized detectors but these applications are relatively rare.

A detector using a gamma ray scintillator has been disclosed in US 7 525 101 B2 of Grodzins. Grodzins discloses a detector, comprising a neutron scintillator, being opaque for incoming optical photons, sandwiched between two light guides, one of the light guides serving as a gamma ray scintillator also. This detector also generally utilizes heavy charged particle emission following a neutron capture. Grodzins does mention ⁶Li, ¹⁰B, ¹¹³Cd, or ¹⁵⁷Gd as neutron capture materials. Those are used in combination with a ZnS scintillation component, wherein the charged particles loose energy, causing the ZnS material to scintillate with the emission of about 50 optical photons for every kV of energy loss, thus resulting in hundreds of thousands of optical light quanta after each neutron capture.

As a consequence, the detector disclosed by Grodzins is emitting light quanta to both sides of the neutron scintillator sheet. The detector itself then measures the coincidence of the light detection on both sides of the neutron scintillator sheet. Such a coincident measurement is seen as a signature for a neutron-capture in neutron scintillation sheet. This detector is discriminating against gamma radiation, as a gamma quant would be stopped in the gamma scintillator only, which is optically separated from the other light guide.

Apart from the complicated setup, the Grodzins disclosure has the disadvantage that it cannot discriminate neutron events against cosmic background radiation and other energetic charged particle radiation, which may cause scintillation within the neutron absorber material or Cerenkov light in the light guides, followed by a light emission into both light guides also.

Another disadvantage of the Grodzins disclosure is an unsatisfactory neutrongamma discrimination in case of using ¹¹³Cd or ¹⁵⁷Gd as neutron capture materials. In this case, the detector is sensitive to external gammas as well. Pulses generated by detecting external gamma radiation in the neutron scintillator cannot be distinguished from pulses due to gammas produced by neutron capture reactions.

Reeder, Nuclear Instruments and Methods in Physics Research A 340 (1994) 371, proposes a neutron detector made of Gadolinium Oxyorthosilicate (GSO) surrounded by plastic scintillators operated as total gamma absorption spectrometer in coincidence with the GSO. As plastic scintillators are distinguished by a large attenuation length for energetic gamma rays, the proposed total absorption spectrometer would either be quite inefficient or would require large volumes of plastic scintillator. A further disadvantage is that there are difficulties when collecting the light from the plastic material with a reasonable number of photodetectors. In addition, large plastic layers not only moderate but also absorb a part of the neutron flux, thus reducing the neutron detector efficiency. A further disadvantage is that background, due to Compton scattering of gamma rays from an external source in the neutron detector, followed by an interaction of the scattered gamma with the gamma detector, cannot be eliminated.

Another neutron detector utilizing a gamma ray scintillator is disclosed by Bell in US 6 011 266. Bell is using a gamma ray scintillator, surrounded by a neutron sensitive material, preferably comprising boron. The neutron capture reaction results in fission of the neutron sensitive material into an alpha-particle and a ⁷Li ion, whereby the first excited state of the lithium ion decays via emission of a single gamma ray at 478 keV which is then detected by the scintillation detector. At the same time, the detector disclosed in Bell is sensible to gamma rays, resulting from an incident radiation field, as the neutron sensitive material is not acting as a shield against gamma rays.

One of the disadvantages of such a detector is that the single gamma ray following the decay of the first excited state of ⁷Li lies within an energy region, where a lot of other gamma rays are present. It is, therefore, necessary to measure this single decay very accurately in order to achieve at least reasonable results, thus increasing the technical complexity and the related costs substantially. Furthermore, a discrimination against charged particle radiation, for example such of cosmic origin, is difficult if not impossible with a detector as disclosed by Bell.

In summary, none of the known neutron detector concepts is competitive with a ³He tube if decisive parameters like neutron detection efficiency per volume, neutron detection efficiency per cost, gamma suppression factor, simplicity and ruggedness and availability of detector materials are considered simultaneously. Therefore, the purpose of the invention is to overcome the disadvantages of the prior art and to provide an efficient neutron detector with a simple setup and a high confidentiality of neutron detection.

This problem is solved by an apparatus for detecting neutron radiation, preferably thermal neutrons, comprising at least a gamma ray scintillator, said scintillator comprising an inorganic material with an attenuation length Lg of less than 10 cm, preferably less than 5 cm for gamma rays of 5 MeV energy in order to provide for high gamma ray stopping power for energetic gamma rays within the gamma ray scintillator, the gamma ray scintillator further comprising components with a product of neutron capture cross section and concentration leading to an absorption length Lₙ for thermal neutrons which is larger than 0,5 cm but smaller than five times the attenuation length Lg, preferably smaller than two times the attenuation length Lg for 5 MeV gammas in the said scintillator, the neutron absorbing components of the gamma ray scintillator releasing the energy deployed in the excited nuclei after neutron capture mainly via gamma radiation, the gamma ray scintillator having a diameter or edge length of at least 50% of Lg, preferably of at least Lg, in order to absorb an essential part of the gamma ray energy released after neutron capture in the scintillator. The apparatus is further comprising a light detector, optically coupled to the gamma ray scintillator in order to detect the amount of light in the gamma ray scintillator, and evaluation device coupled to the light detector, said device being able to determine the amount of light, detected by the light detector for one scintillation event, that amount being in a known relation to the energy deployed by gamma radiation in the gamma ray scintillator. The evaluation device is configured to classify detected radiation as neutrons when the measured total gamma energy Eₛᵤₘ is above 2,614 MeV.

The terms diameter and edge length mentioned above refer to the size of the gamma ray scintillator. In case it is a cylindrical scintillator, the term diameter or edge length refers to either the diameter or the height - edge length - of the cylinder, whichever is smaller.

Preferably, the evaluation device is configured to classify detected radiation as neutrons when the measured total gamma energy is below a predetermined threshold, preferably below 10 MeV, in addition.

According to a preferred embodiment, the gamma ray scintillator is comprising at least one of the elements Chlorine (Cl), Manganese (Mn), Cobalt (Co), Selenium (Se), Bromine (Br), Iodine (I), Caesium (Cs), Praseodymium (Pr), Lanthanum (La), Holmium (Ho), Ytterbium (Y), Lutetium (Lu), Hafnium (Hf), Tantalum (Ta), Tungsten (W), or Mercury (Hg) as a constituent. Most preferably, the gamma ray scintillator is selected from a group of Lead Tungstate (PWO), Sodium Iodide (NaI), Caesium Iodide (CsI), or Lanthanum Bromide (LaBr₃).

According to another embodiment, the gamma ray scintillator is comprising at least one of the elements Cadmium (Cd), Samarium (Sm), Dysprosium (Dy), Europium (Eu), Gadolinium (Gd), Iridium (Ir), Indium (In), or Mercury (Hg) as an activator or dopant. For example, the gamma ray scintillator may be selected from a group of Europium doped Strontium Iodide (SI₂) or Calcium Flouride (CaF₂).

According to another embodiment of the invention, the gamma ray scintillator is split in at least three separate parts, each of these parts being coupled to a light detector so that the signals from the different parts can be distinguished, where the evaluation device is configured to classify detected radiation as neutrons when at least two different parts have detected a signal being due to gamma interaction, following a neutron capture in the neutron absorbing components of the gamma ray scintillator. The light detector allowing to distinguish signals from the different parts of the gamma ray scintillator may be a multi-anode photomultiplier tube. It has to be understood that the parts of the gamma ray scintillator as described in the previous paragraph may form several more or less integral parts of a single detector or, as an alternative, may comprise at least three individual gamma ray scintillators, the signals of which being commonly evaluated as described above.

In yet another embodiment, the gamma ray scintillator is at least in part surrounded by a shield section, said shield section comprising a scintillator, the emission light of said scintillator being measured by a light detector, where the output signals of the light detector are evaluated by the common evaluation device of the apparatus. The evaluation device is preferably configured to classify detected radiation as neutrons when no signal with an energy of above a certain shield threshold has been detected from the shield section scintillator in the same time frame (anti-coincidence), said shield threshold being determined according to the steps of measuring the thickness t (in cm) of the scintillator in the third section, then determining the energy Eₘᵢₙ (in MeV) corresponding to the energy deposition of minimum ionizing particles covering a distance t in said scintillator, by multiplying said thickness with the density of the scintillator material, given in g/cm³, and with the energy loss of minimum ionizing particles in said scintillator, given in MeV/(g/cm²), and by finally setting the shield threshold below said energy. The shield section is preferably optically coupled to the light detector of the gamma ray scintillator and the evaluation device is preferably configured to distinguish the signals from the gamma ray scintillator and shield section by their signal properties. It is of advantage also when a wavelength shifter is mounted in between the scintillator of the shield section and the photo detector.

The scintillator of the shield section may be selected from a group of materials comprising constituents with low atomic number Z, serving as a neutron moderator for fast neutrons.

Disclosed is also a method for detecting neutrons, preferably thermal neutrons, using an apparatus as described above, comprising the following steps of capturing a neutron in the gamma ray scintillator, then measuring the light emitted from the gamma ray scintillator as a consequence of the gamma radiation energy loss, and determining the total energy loss of the gamma radiation, following a neutron capture, from the light emitted from the gamma ray scintillator of the apparatus and finally classifying an event as neutron capture when the total energy loss measured is above 2,614 MeV. Preferably, an event is classified as neutron capture only when the total energy loss measured is below a predetermined threshold, preferably below 10 MeV.

According to another method for detecting neutrons, preferably thermal neutrons, an apparatus with a gamma ray scintillator, being split in at least three parts as described above is used to utilize the following method: capturing a neutron in the gamma ray scintillator, then measuring the light emitted from the gamma ray scintillator as a consequence of the gamma radiation energy loss, then determining the total energy loss of the gamma radiation, following a neutron capture, from the light emitted from the gamma ray scintillator and finally classifying an event as neutron capture when the total energy loss measured is above 2,614 MeV and when an energy loss is measured in at least two parts of the gamma scintillator.

A method for detecting neutrons, preferably thermal neutrons, using an apparatus with a shield detector as described above is disclosed also, said method comprising the following steps of capturing a neutron in the gamma ray scintillator, then measuring the light emitted from the gamma ray scintillator as a consequence of the gamma radiation energy loss before determining the total energy loss of the gamma radiation, following a neutron capture, from the light emitted from the gamma ray scintillator, and classifying an event as neutron capture when the total energy loss measured is above 2,614 MeV. According to this method, it is required in addition that no signal with an energy of above a certain shield threshold has been detected from the shield scintillator in the same time frame (anti-coincidence) in order to qualify an event as being due to neutron capture, said shield threshold being determined according to the following steps of measuring the thickness t (in cm) of the shield scintillator, determining the energy Eₘᵢₙ (in MeV) corresponding to the energy deposition of minimum ionizing particles covering a distance t in said shield scintillator, by multiplying said thickness with the density of the scintillator material, given in g/cm³, and with the energy loss of minimum ionizing particles in said scintillator, given in MeV/(g/cm²), and then setting the shield threshold below said energy. Preferably the total energy loss of the gamma radiation, following a neutron capture is determined from the light emitted from both the gamma ray scintillator and the shield scintillator.

According to another method, using the inventive apparatus with shield, an event is classified as neutron capture only when the total energy loss of the gamma radiation, following a neutron capture, is below a predetermined threshold, preferably below 10 MeV.

Further disclosed is method, using the inventive apparatus with shield, according to which an event is classified as external gamma radiation if an energy loss below the shield threshold is observed in the shield scintillator but no energy loss is observed in the gamma ray scintillator.

Some specific embodiments of the invention are described along with the following figures.
- Fig. 1: shows an embodiment of the invention with the cylindrical scintillator and a light detector,
- Fig. 2: shows the inventive detector with a surrounding shield detector,
- Fig. 3: shows a similar detector, using just one single light detector, and
- Fig. 4: shows the various decay times of signals, emitted from different scintilla- tor materials.

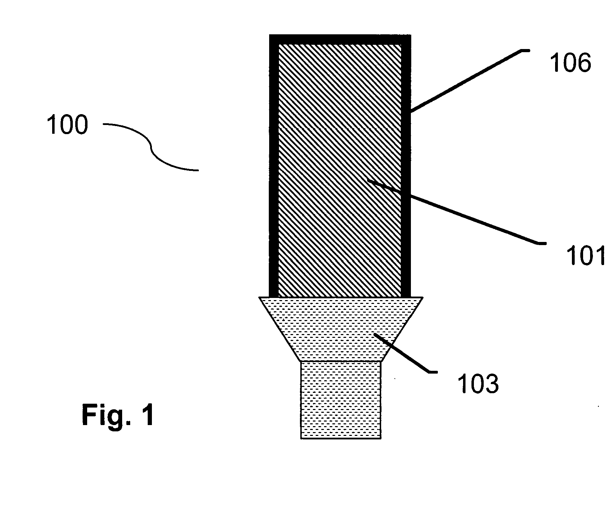

**Fig. 1** shows a longitudinal cut through an embodiment. The detector **100** and two of its main sections are shown here. A gamma scintillator material **101** can be seen, which is mounted on a light detector **103,** preferably a photo multiplier tube or an array of Geiger-mode avalanche photodiodes (G-APD). The gamma scintillator material may be encapsulated with a material **106.** In a preferred embodiment, that material **106** may be of sufficient thickness and, at the same time, comprise sufficient material with low atomic number Z so as to serve as a moderator for fast neutrons.

The gamma scintillator material is selected in a way that it contains constituents or dopants with a concentration and with a neutron capture cross section for thermal (slow) neutrons large enough to capture most of the thermal neutrons, hitting the detector.

The material within the gamma ray scintillator **101,** being responsible for the neutron capture, is not a material, which substantially leads to fission or the emission of charged particles once the neutron has been captured, but is mainly releasing its excitation energy via gamma ray emission. Appropriate materials are, for instance, materials containing Chlorine (Cl), Manganese (Mg), Cobalt (Co), Selenium (Se), Bromine (Br), Iodine (I), Caesium (Cs), Praseodymium (Pr), Lanthanum (La), Holmium (Ho), Ytterbium (Y), Lutetium (Lu), Hafnium (Hf), Tantalum (Ta), Tungsten (W) or Mercury (Hg), especially when used as a constituent of the scintillator material. In an especially preferred embodiment, the gamma ray scintillator **101** is made from either Lead Tungstate (PWO), Sodium Iodide (NaI), Cesium Iodide (CsI) or Lanthanum Bromide (LaBr₃).

Another way to increase the neutron capture rate in the gamma ray scintillator **101** is to dope the scintillator with feasible materials. Such materials may be Gadolinium (Gd), Cadmium (Cd), Europium (Eu), Samarium (Sm), Dysprosium (Dy), Iridium (Ir), Mercury (Hg), or Indium (In). This allows to control the absorption rate for thermal neutrons by increasing or decreasing the concentration of the dopant within the gamma ray scintillator **101.**

As every neutron capture deposits a considerable amount of excitation energy, mostly about 5 to 10 MeV, in the nucleus, depending on the capturing nuclide, this is roughly the energy which is released in form of multiple gamma quanta with energies ranging from a few keV up to some MeV. Contrary to that, the usual neutron capture reaction used in state of the art detectors lead to an energy release mostly by the emission of fission products and/or charged particles. Those processes are also often accompanied by gamma radiation, which, nevertheless, amounts only to a smaller part of the total energy release.

The inventive apparatus utilizes a neutron capture, followed by the release of gamma quanta with a total energy somewhere in between 5 to 10 MeV. As a consequence, the novel detector concept with an efficient gamma scintillator allows to measure a substantial portion of those gamma quanta emitted and so to sufficiently discriminate events following neutron capture against radiation background, in particular against gamma radiation due to most radioactive decays.

It has to be noted that the gamma cascades following a neutron capture are emitted very fast so that the single gamma events can not be distinguished by the gamma scintillator **101.** Therefore, the gamma scintillator **101** as such is summing up all gamma energies, producing an amount of light, which is mostly proportional to the total energy Eₛᵤₘ deposed in the scintillator material. The scintillator, therefore, cannot distinguish between a single high energy gamma and a multitude of lower energy gamma rays, absorbed in the same time window.

The gamma scintillator **101** is therefore designed to operate as a kind of calorimeter, thus summing up all energy deposited after a single neutron capture event. It is constructed and arranged in a way that maximizes the portion of the sum energy Eₛᵤₘ which is on average absorbed in the scintillation material, following a neutron capture in the neutron absorber, at minimum cost and minimum detector volume. Considering that, depending on the specific reaction used, only a part of the sum energy Eₛᵤₘ is in fact absorbed, it is advantageous to define an appropriate window, in other words a sum energy gate, in the detector. Only events with a sum energy Eₛᵤₘ within that window would then be identified as neutron captures with a sufficient certainty.

The evaluation device, not shown here, evaluating the signal output from the light detector **103,** is set to define an event as neutron capture when the sum energy Eₛᵤₘ is larger than 2,614 MeV. With this condition for a lower threshold, the invention makes use of the fact that the highest single gamma energy resulting from one of the natural radioactive series has exactly 2,614 MeV, which is the gamma decay in ²⁰⁸Tl, being part of the natural thorium radioactive series.

As it is highly unlikely to measure two independent gamma rays from two sources in coincidence, the threshold of 2,614 MeV is good enough to discriminate against natural or other background radiation.

It is worth noting that such a gamma calorimeter is an efficient detector for neutron capture gamma rays produced outside of the detector as well. This could improve the sensitivity of the inventive apparatus for detecting neutron sources. This is due to the fact that all materials surrounding a neutron source capture neutrons to more or less extent, finally capturing all the neutrons produced by the source. These processes are mostly followed by emission of energetic gammas, often with energies well above 3 MeV. Those gamma rays may contribute to the neutron signals in the inventive detector if they deposit a sufficient part of their energy in the gamma ray scintillator of the apparatus.

In order to operate the gamma scintillator in a calorimetric regime, it is advantageous to choose the size of the scintillator in dependence from the scintillator material in a way that a substantial portion of the gamma rays emitted after neutron capture can be stopped in the gamma scintillator. A very suitable material, for example, is Lead Tungstate (PWO or PbWO₄) as this material is distinguished by a striking stopping power for the gamma energies of interest, including the highest gamma energies, and a fairly high neutron capture capability due to Tungsten (W) which is one of the crystal constituents. The low light output (in photons per MeV) of PWO is acceptable with this application, because it does not require surpassing spectrometric performance. An also important aspect is that this material is easily available in large quantities for low cost.

It is advisable to use PWO scintillators with a diameter around 5 to 8 centimeters as the gamma ray scintillator of the apparatus. Such a detector is able to absorb (1) about 50% (or even more) of the thermal neutrons hitting the detector, and (2) more than 3 MeV of gamma energy in more than 50% of all cases when gamma rays with an energy above 4 MeV are produced in the volume of this detector.

Selecting the material for the gamma ray scintillator **101** appropriately, that is especially with an absorption length Lₙ for thermal neutrons larger than 0,5 cm but smaller than two times the attenuation length Lg for gamma radiation of 5 MeV, most of the neutrons will be captured far enough from the surface of the gamma ray scintillator **101** so that the following gamma emission will occur mostly within the gamma ray scintillator **101.** In case the gamma ray scintillator is large enough, the absorption length may be larger than two times the attenuation length but should not exceed five times the attenuation length. As a consequence, the gamma source will be surrounded by the gamma ray scintillator more or less totally, thus increasing the gamma detection efficiency after neutron capture - and therefore the neutron detection efficiency - dramatically.

It may also be advisable to set a further, upper threshold for the sum energy Eₛᵤₘ at about 10 MeV. The total energy emitted after neutron capture usually does not exceed this value. Nevertheless, signals with energy signatures above that threshold may occur, following the passage of cosmic radiation, for example muons, through the gamma scintillator, especially when the detector is relatively large. Those events are discriminated and suppressed by the said threshold. Actually both, the lower and the upper, thresholds for the energy deposition in section two should be optimized in a way that the effect-to-background ratio is optimized for the scenario of interest.

The sum energy Eₛᵤₘ is usually measured in the gamma ray scintillator **101** by collecting and measuring the light produced in the gamma ray scintillator, using a light detector **103,** and evaluating the measured signal from the light detector. One of the main neutron detection criteria is to generally require a sum energy Eₛᵤₘ higher than 2,614 MeV.

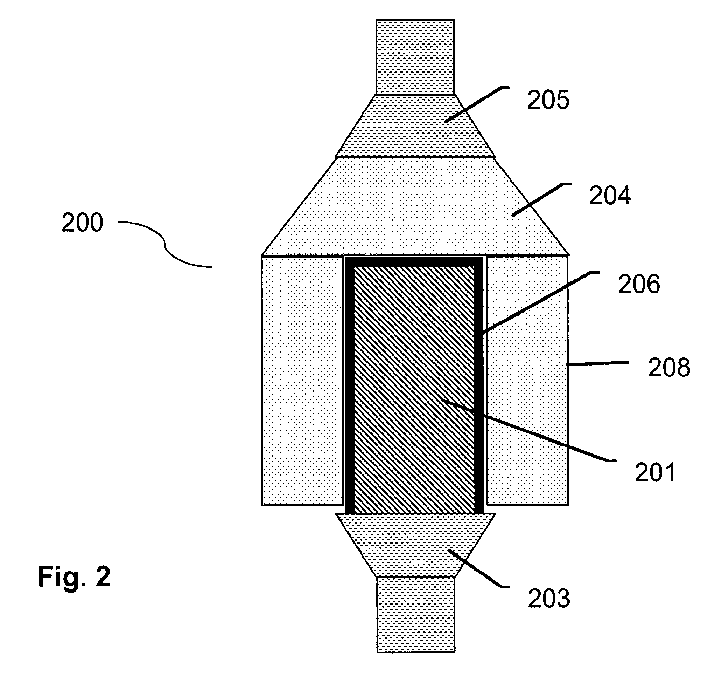

Another embodiment **200** of the invention is shown in **Fig. 2****.** In the center, an apparatus as described in the first embodiment is to be seen, consisting of the gamma ray scintillator section **201** and the light detector **203.** This detector may optionally be encapsulated with a material **206.** The gamma scintillator portion of the detector is surrounded by a shield section **208,** also comprising scintillator material **204.** The light generated in this shield scintillator material is detected by an additional light detector **205.**

This outer detector **208** preferably serves as anti-coincidence shield against background radiation, for example cosmic radiation. When the shield section **208** is making use of a scintillator material with fairly low atomic numbers, it may also serve as a moderator for fast neutrons at the same time, thus allowing the apparatus to detect fast neutrons also. In this context it has to be mentioned that also the encapsulating material **206** of the detector may be selected in a way that this material serves as a neutron moderator, whereas such a selection of material is not limited to the embodiment with a surrounding shield section **208,** but may also be used in combination with the other embodiments.

In a preferred embodiment, the outer scintillator material **204** of the third section comprises plastic scintillator material. Such material is easily available and easy to handle.

The minimum energy deposition of penetrating charged particles in the scintillator of the shield section (in MeV) is given by the scintillator thickness (given in centimeters), multiplied with the density of the scintillator (given in grams per cubic centimeter) and with the energy loss of minimum ionizing particles (mips) in the corresponding scintillator material (given in MeV per gram per square centimeter). The latter is larger than 1 MeV/(g/cm²) for all common materials and larger than 1,5 MeV/(g/cm²) for all light materials, which allows an easy estimate of the said upper limit. For example, using a 2 cm Plastic (PVT) scintillator in the shield section, for instance, would result in an lower limit of about 2×1×1,5 MeV or about 3 MeV for a signal due to penetrating charged particles in the shield section. Those signals would have to be rejected as background. In this case, the anti-coincidence condition for the outer shield section could be that no energy has been detected in the shield section of more than 3 MeV.

As a consequence, an energy detected in the outer shield section of the apparatus of less than 3 MeV in the specific example, is likely not to origin from energetic cosmic radiation so that such a lower energy event, if detected in coincidence with gamma rays in the gamma ray scintillator **201,** could be added to the sum energy Eₛᵤₘ as it may have its origin in the neutron capture within the gamma ray scintillator. If this signal is, however, actually due to external gamma radiation, the sum energy condition (Eₛᵤₘ > 2614 keV) would reject the corresponding event.

It is worth mentioning that, when an energy deposition is observed in the shield section **208** which is smaller than the minimum energy deposition of penetrating charged particles, while no signal is observed in the gamma ray scintillator **201** at the same time, this could be taken as a signature for the detection of an external gamma ray in the shield section **208,** thus using the shield scintillator as a detector (or spectrometer) for (external) gamma rays in parallel.

In a similar way, an energy deposition in the shield section **208** of less than the minimum energy deposition of penetrating charged particles, accompanied by a signal in the gamma ray scintillator **201** with a sum energy Eₛᵤₘ of less that 2,614 MeV could be taken as a signature for the detection of an external gamma which deposits energy in both sections due to Compton scattering followed by a second scattering act or photoabsorption. Therefore the combination of the shield section **208** and the gamma ray scintillator **201** could be operated as a detector (or spectrometer) for external gamma rays, while the sum energy criterion allows discriminating the neutron capture events.

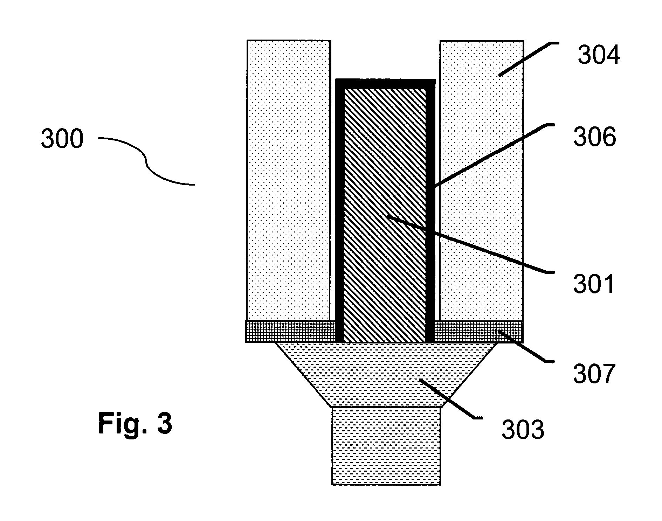

A further improvement of said shield detector variant is shown in **Fig. 3****.** Again, a gamma ray scintillator **301** is mounted on a light detector **303.** The gamma ray scintillator may again be surrounded by some kind of encapsulation **306.**

Different from the other embodiments, the light sensitive surface of the light detector **303** is extending across the diameter, covered by the gamma ray detector **301.** This outer range of the light detector **303** is optically coupled to a circular shield section, preferably again a plastic scintillator **304,** surrounding the gamma ray scintillator **301** of the detector.

In order to properly distinguish the signal originating from the gamma ray scintillator **301** from the signals originating from the plastic scintillator **304,** a wavelength shifter **307** may be added. Such a wavelength shifter preferably absorbs the light from the plastic scintillator material **304,** emitting light with a wave length similar to the wave length emitted from the gamma ray scintillator **301** so that it can be properly measured by the same light detector **303.** In order to distinguish signals from the plastic scintillator **304** from those of the gamma ray scintillator **301,** it is an advantage if the light, emitted from the wave length shifter **307** has a different decay time, thus allowing the evaluation device to clearly distinguish between the two signal sources as described above.

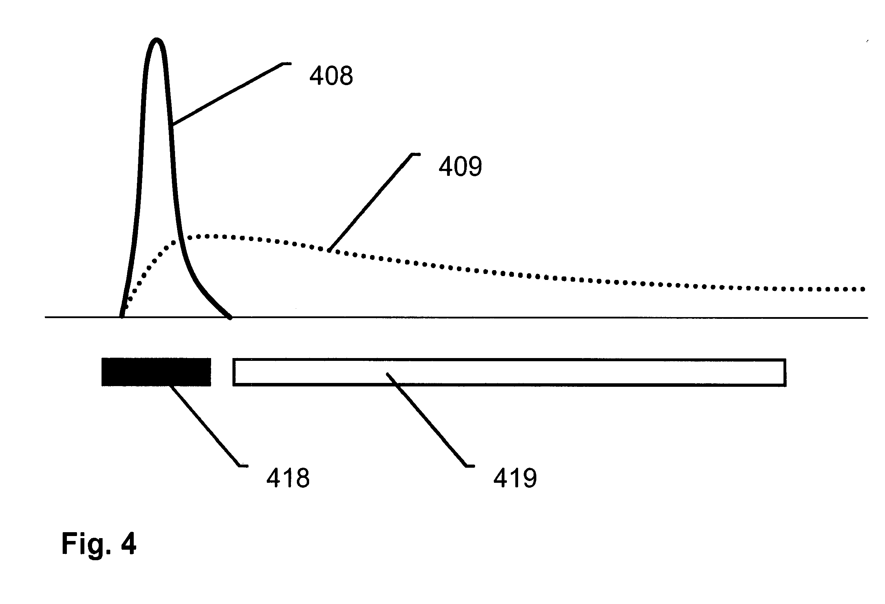

An example of the respective signals with different decay time is shown in **Fig. 4****.** Pulse **408** is, for example, resulting from the gamma ray scintillator, consisting of a scintillation material with a short decay time. When the decay time of the light, emitted from the shield scintillator is much larger, as shown by the dashed line **409** in **Fig. 4****,** those signals could easily be distinguished either by digital signal processing or by simply setting two timing windows **418** and **419** on the signal output of the light detector. In the same way signals from a gamma ray scintillator with a longer decay time could be easily distinguished from signals from a shield scintillator with a much shorter decay time.

It is not essential that the gamma ray scintillator comprises a single gamma scintillator material arranged in a single detector block read out with a common photodetector. In another embodiment, not shown here, the gamma ray scintillator, being used as a calorimeter, consists of multiple individual parts - detectors -, which could be based on different scintillator materials, and read out by individual photodetectors. In this case the sum energy Eₛᵤₘ is constructed by summing up all gamma energy contributions of the individual detectors, derived from the light signals of the individual detectors which occur within the same time frame (i.e., in coincidence). Such an embodiment is of advantage if detectors originally designed for another purpose, e.g. detection and spectroscopy of external gamma radiation can be involved in the inventive apparatus in order to reduce the total expense.

Yet another feature of the invention is the possibility to utilize the high multiplicity of the gamma rays emitted after a neutron capture. If the gamma ray scintillator is set up in a way that it comprises three or more detectors, the multiplicity may be evaluated also. If the light detector is split in a way that the light of, for example four, gamma ray scintillators can be distinguished, for instance by using multi-anode photomultiplier tubes, it can also be evaluated separately. Therefore, in addition to measuring the sum energy Eₛᵤₘ, it is also possible to require a certain multiplicity of the measured gamma events.

Taking into account the limited efficiency of the detectors, it has proven to be an advantage to require at least two parts of such a gamma ray scintillator having detected gamma events. Especially in addition to the sum energy condition Eₛᵤₘ larger than 2,614 MeV this multiplicity condition further increases the accuracy of the inventive detector.

Summarizing the above, the invention claimed does provide a low cost, easy to set up detector, which is based on well known, inexpensive, of-the-shelf scintillator materials and well known, inexpensive, of-the-shelf photodetectors, and a method for evaluating the emitted signals with an efficiency and accuracy comparable to the state of the art ³He-counters.

## Claims

1. Apparatus (100, 200, 300) for detecting neutron radiation, preferably thermal neutrons, comprising a light detector (103, 203, 303), optically coupled to a gamma ray scintillator (101, 201, 301) in order to detect the amount of light in the gamma ray scintillator (101, 201, 301), the apparatus further comprising an evaluation device coupled to the light detector (103, 203, 303), said device being able to determine the amount of light, detected by the light detector for one scintillation event, that amount being in a known relation to the energy deployed by gamma radiation in the gamma ray scintillator (101, 201, 301), **characterized in that** the evaluation device is configured to classify detected radiation as neutrons when the measured total gamma energy Eₛᵤₘ is above 2,614 MeV, the apparatus (100, 200, 300) **characterised in that**
- the gamma ray scintillator (101, 201, 301) comprises an inorganic material with an attenuation length L_{g} of less than 10 cm, preferably less than 5 cm for gamma rays of 5 MeV energy in order to provide for high gamma ray stopping power for energetic gamma rays within the gamma ray scintillator,
- the gamma ray scintillator (101, 201, 301) comprising components with a product of neutron capture cross section and concentration leading to an absorption length Lₙ for thermal neutrons which is larger than 0,5 cm but smaller than five times the attenuation length L_{g}, preferably smaller than two times the attenuation length Lg for 5 MeV gammas in the said scintillator, the neutron absorbing components of the gamma ray scintillator (101, 201, 301) releasing the energy deployed in the excited nuclei after neutron capture mainly via gamma radiation,
- the gamma ray scintillator (101, 201, 301) having a diameter or edge length of at least 50% of L_{g}, preferably of at least Lg, in order to absorb an essential part of the gamma ray energy released after neutron capture in the scintillator.

2. The apparatus of the preceding claim, where the evaluation device is configured to classify detected radiation as neutrons when the measured total gamma energy is below a predetermined threshold, preferably below 10 MeV, in addition.

3. The apparatus of claim 1, the gamma ray scintillator (101, 201, 301) comprising at least one of the elements Chlorine (Cl), Manganese (Mn), Cobalt (Co), Selenium (Se), Bromine (Br), Iodine (I), Caesium (Cs), Praseodymium (Pr), Lanthanum (La), Holmium (Ho), Ytterbium (Y), Lutetium (Lu), Hafnium (Hf), Tantalum (Ta), Tungsten (W), or Mercury (Hg) as a constituent.

4. The apparatus of the preceding claim, where the gamma ray scintillator (101, 201, 301) is selected from a group of Lead Tungstate (PWO), Sodium Iodide (NaI), Caesium Iodide (CsI), or Lanthanum Bromide (LaBr₃).

5. The apparatus of the claim 1, the gamma ray scintillator (101, 201, 301) comprising at least one of the elements Cadmium (Cd), Samarium (Sm), Dysprosium (Dy), Europium (Eu), Gadolinium (Gd), Iridium (Ir), Indium (In), or Mercury (Hg) as an activator or dopant.

6. The apparatus of the preceding claim, where the gamma ray scintillator (101, 201, 301) is selected from a group of Europium doped Strontium Iodide (SI₂) or Calcium Flouride (CaF₂).

7. The apparatus of claim 1, where the gamma ray scintillator (101, 201, 301) is split in at least three separate parts, each of these parts being coupled to a light detector (103, 203, 303) so that the signals from the different parts can be distinguished, where the evaluation device is configured to classify detected radiation as neutrons when at least two different parts have detected a signal being due to gamma interaction, following a neutron capture in the neutron absorbing components of the gamma ray scintillator (101, 201, 301).

8. The apparatus of the preceding claim, where the light detector (103, 203, 303) allowing to distinguish signals from the different parts of the gamma ray scintillator (101, 201, 301) is a multi-anode photomultiplier tube.

9. The apparatus of claim 1, where the gamma ray scintillator (101, 201, 301) is at least in part surrounded by a shield section (204, 304), said shield section (204, 304) comprising a scintillator, the emission light of said scintillator being measured by a light detector (205, 303), where the output signals of the light detector (205, 303) are evaluated by the common evaluation device of the apparatus.

10. The apparatus of the preceding claim, where the evaluation device is configured to classify detected radiation as neutrons when no signal with an energy of above a certain shield threshold has been detected from the shield section scintillator (204, 304) in the same time frame (anti-coincidence), said shield threshold being determined according to the following steps:
- measuring the thickness t (in cm) of the scintillator in the third section,
- determining the energy Eₘᵢₙ (in MeV) corresponding to the energy deposition of minimum ionizing particles covering a distance t in said scintillator, by multiplying said thickness with the density of the scintillator material, given in g/cm³, and with the energy loss of minimum ionizing particles in said scintillator, given in MeV/(g/cm²),
- setting the shield threshold below said energy.

11. The apparatus of the preceding claim, where the shield section (304) is optically coupled to the light detector (303) of the gamma ray scintillator (301) and where the evaluation device is configured to distinguish the signals from the gamma ray scintillator (301) and shield section (304) by their signal properties.

12. The apparatus of the preceding claim, where a wavelength shifter (307) is mounted in between the scintillator of the shield section (304) and the photo detector (303).

13. The apparatus of claim 9, where the scintillator is selected from a group of materials comprising constituents with low atomic number Z, serving as a neutron moderator for fast neutrons.

14. Method for detecting neutrons, preferably thermal neutrons, using an apparatus of claim 1, comprising the following steps:
- Capturing a neutron in the gamma ray scintillator (101, 201, 301),
- Measuring the light emitted from the gamma ray scintillator (101, 201, 301) as a consequence of the gamma radiation energy loss,
- Determining the total energy loss of the gamma radiation, following a neutron capture, from the light emitted from the gamma ray scintillator (101, 201, 301) of the apparatus (100, 200, 300) and
- Classifying an event as neutron capture when the total energy loss measured is above 2,614 MeV.

15. Method according to the preceding claim, where an event is classified as neutron capture only when the total energy loss measured is below a predetermined threshold, preferably below 10 MeV.

## Patentansprüche

1. Vorrichtung (100, 200, 300) zum Nachweis von Neutronenstrahlung, insbesondere von thermischen Neutronen, einen Lichtsensor (103, 203, 303) umfassend, der mit einem Gammastrahlen-Szintillator (101, 201, 301) optisch verbunden ist, um die Lichtmenge im Gammastrahlen-Szintillator (101, 201, 301) festzustellen, wobei das Gerät außerdem eine an den Lichtsensor (103, 203, 303) angeschlossene Auswertungsvorrichtung umfasst, wobei die genannte Vorrichtung geeignet ist, die Lichtmenge zu bestimmen, die vom Lichtsensor bei einem Szintillationsereignis nachgewiesen wurde, wobei diese Menge in einem bekannten Verhältnis zur Energie steht, die durch Gammastrahlung im Gammastrahlen-Szintillator (101, 201, 301) abgegeben wird, **dadurch gekennzeichnet, dass** die Auswertungsvorrichtung dafür ausgelegt ist, festgestellte Strahlung als Neutronen einzustufen, wenn die gemessene Gammastrahlen-Gesamtenergie Eₛᵤₘ 2,612 MeV überschreitet, wobei das Gerät (100, 200, 300) **dadurch gekennzeichnet ist, dass**
- der Gammastrahlen-Szintillator (101, 201, 301) ein anorganisches Material mit einer Schwächungslänge Lg von weniger als 10 cm, vorzugsweise von weniger als 5 cm, für Gammastrahlen einer Energie von 5 MeV enthält, um eine hohe Gammastrahlen-Abbremswirkung für energiereiche Gammastrahlung innerhalb des Gammastrahlen-Szintillators sicherzustellen,
- der Gammastrahlen-Szintillator (101, 201, 301) Bauteile mit einem Produkt aus Neutroneneinfangquerschnitt und Konzentration enthält, das zu einer Schwächungslänge Lₙ für thermische Neutronen führt, die größer ist, als 0,5 cm, aber kleiner als das Fünffache der Schwächungslänge Lg, vorzugsweise kleiner als das Doppelte der Schwächungslänge Lg für Gammateilchen von 5 MeV im genannten Szintillator, wobei die Neutronen absorbierenden Komponenten des Gammastrahlen-Szintillators (101, 201, 301) die in den nach Neutroneneinfang angeregten Kernen vorhandene Energie hauptsächlich als Gammastrahlen abgeben,
- wobei der Gammastrahlen-Szintillator (101, 201, 301) über einen Durchmesser oder eine Kantenlänge von mindestens 50% von Lg verfügt, vorzugsweise mindestens von Lg, um einen wesentlichen Teil der Gammastrahlenenergie zu absorbieren, die nach Neutroneneinfang im Szintillator abgegeben wird.

2. Vorrichtung nach dem vorangehenden Patentanspruch, in dem die Auswertungsvorrichtung dafür ausgelegt ist, nachgewiesene Strahlung als Neutronen einzustufen, wenn die gemessene Gammastrahlen-Gesamtenergie zusätzlich unter einem festgelegten Schwellenwert liegt, vorzugsweise unter 10 MeV.

3. Vorrichtung nach Patentanspruch 1, in dem der Gammastrahlen-Szintillator (101, 201, 301) mindestens eins der folgenden Elemente als Bestandteil enthält: Chlor (Cl), Mangan (Mn), Kobalt (Co), Selen (Se), Brom (Br), Jod (I), Cäsium (Cs), Praseodym (Pr), Lanthan (La), Holmium (Ho), Ytterbium (Y), Lutetium (Lu), Hafnium (Hf), Tantal (Ta), Wolfram (W), Quecksilber (Hg).

4. Vorrichtung nach dem vorangehenden Patentanspruch, in dem der Gammastrahlen-Szintillator (101, 201, 301) aus der Gruppe Bleiwolframat (PWO), Natriumjodid (NaI), Cäsiumjodid (CsI), Lanthanbromid (LaBr₃) ausgewählt wurde.

5. Vorrichtung nach dem Patentanspruch 1, in dem der Gammastrahlen-Szintillator (101, 201, 301) mindestens eins der Elemente Cadmium (Cd), Samarium (Sm), Dysprosium (Dy), Europium (Eu), Gadolinium (Gd), Iridium (Ir), Indium (In) und Quecksilber (Hg) als Aktivator oder Dotierstoff enthält.

6. Vorrichtung nach dem vorangehenden Patentanspruch, in dem der Gammastrahlen-Szintillator (101, 201, 301) aus der Gruppe aus mit Europium dotiertem Strontiumjodid (SrI₂) oder Kalziumfluorid (CaF₂) ausgewählt wurde.

7. Vorrichtung nach Patentanspruch 1, in dem der Gammastrahlen-Szintillator (101, 201, 301) in mindestens drei Teile unterteilt ist, wobei jeder dieser Teile mit einem Lichtsensor (103, 203, 303) verbunden ist, so dass die Signale der verschiedenen Teile unterschieden werden können, wobei die Auswertungsvorrichtung dafür ausgelegt ist, festgestellte Strahlung als Neutronen einzustufen, wenn mindestens zwei verschiedene Teile ein aus einer Gammawechselwirkung stammendes Signal nachgewiesen haben, die einem Neutroneneinfang in den Neutronen absorbierenden Bestandteilen des Gammastrahlen-Szintillators (101, 201, 301) folgen.

8. Vorrichtung nach dem vorangehenden Patentanspruch, in dem der Lichtsensor (103, 203, 303) der es erlaubt, Signale aus den verschiedenen Teilen des Gammastrahlen-Szintillators (101, 201, 301) zu unterscheiden, eine Mehranoden-Sekundärelektronenvervielfacherröhre ist.

9. Vorrichtung nach Patentanspruch 1, in dem der Gammastrahlen-Szintillator (101, 201, 301) mindestens teilweise von einem Abschirmabschnitt (204, 304) umgeben ist, wobei der genannte Abschirmbereich (204, 304) einen Szintillator enthält, wobei das vom genannten Szintillator emittierte Licht durch einen Lichtsensor (205, 303) gemessen wird, wobei die Ausgangssignale des Lichtsensors (205, 303) von der gemeinsamen Auswertungsvorrichtung des Gerätes ausgewertet werden.

10. Vorrichtung nach dem vorangehenden Patentanspruch, in dem die Auswertungsvorrichtung dafür ausgelegt ist, festgestellte Strahlung als Neutronen einzustufen, wenn kein Signal mit einer Energie über einem bestimmten Schwellenwert vom Abschirmbereichs-Szintillator (204, 304) im selben Zeitrahmen festgestellt wurde (Antikoinzidenz), wobei der genannte Abschirmschwellenwert in den folgenden Schritten bestimmt wird:
- Messung der Dicke t (in cm) des Szintillators im dritten Abschnitt,
- Bestimmung der Energie Eₘᵢₙ (in MeV), die der Energieabgabe minimal ionisierender Teilchen entspricht, die eine Länge t im genannten Szintillator bedecken, indem die genannte Dicke mit der Dichte des Szintillatormaterials in g/cm³ multipliziert wird, und mit dem Energieverlust minimal ionisierender Teilchen im genannten Szintillator in MeV/(g/cm²),
- Festsetzen des Abschirmungsschwellenwertes unter der genannten Energie.

11. Vorrichtung nach dem vorangehenden Patentanspruch, in dem der Abschirmungsabschnitt (304) mit dem Lichtsensor (303) des Gammastrahlen-Szintillators (301) optisch verbunden ist und in dem die Auswertungsvorrichtung dafür eingerichtet ist, die Signale, die aus dem Gammastrahlen-Szintillator (301) stammen, von denen aus dem Abschirmungsabschnitt (304) an ihren Signaleigenschaften zu unterscheiden.

12. Vorrichtung nach dem vorangehenden Patentanspruch, in dem ein Wellenlängenshifter (307) zwischen dem Szintillator des Abschirmungsabschnittes (304) und dem Lichtsensor (303) montiert ist.

13. Vorrichtung nach Patentanspruch 9, in dem der Szintillator aus einer Gruppe von Materialien ausgewählt wurde, die Bestandteile mit niedriger Ordnungszahl Z enthalten, die als Neutronenmoderator für schnelle Neutronen dienen.

14. Verfahren zum Nachweisen von Neutronen, vorzugsweise von thermischen Neutronen, unter Verwendung einer Vorrichtung nach Patentanspruch 1, die folgenden Schritte umfassend:
- Einfangen eines Neutrons im Gammastrahlen-Szintillator (101, 201,301),
- Messung des vom Gammastrahlen-Szintillator (101, 201, 301) infolge des Energieverlustes der Gammastrahlen emittierten Lichtes,
- Bestimmung des Gesamtenergieverlustes der Gammastrahlung nach einem Neutroneneinfang aus dem Licht, das vom Gammastrahlen-Szintillator (101, 201, 301) des Geräts (100, 200, 300) emittiert wird, und
- Einstufung eines Ereignisses als Neutroneneinfang, wenn der gemessene Gesamtenergieverlust 2,614 MeV überschreitet.

15. Verfahren nach dem vorangehenden Patentanspruch, in dem ein Ereignis nur als Neutroneneinfang eingestuft wird, wenn der gemessene Gesamtenergieverlust unter einem festgelegten Schwellenwert liegt, vorzugsweise unter 10 MeV.

## Revendications

1. Appareil (100, 200, 300) pour détecter un rayonnement de neutrons, de préférence des neutrons thermiques, comprenant un détecteur de lumière (103, 203, 303), couplé optiquement à un scintillateur de rayons gamma (101, 201, 301) pour détecter la quantité de lumière dans le scintillateur de rayons gamma (101, 201, 301), l'appareil comprenant de plus une unité d'évaluation couplée au détecteur de lumière (103, 203, 303), ladite unité étant capable de déterminer la quantité de lumière, détectée par le détecteur de lumière pour un phénomène de scintillation, cette quantité étant dans une relation connue avec l'énergie déployée par le rayonnement gamma dans le scintillateur de rayons gamma (101, 201, 301), **caractérisé en ce que** l'unité d'évaluation est configurée pour classifier un rayonnement détecté en tant que neutrons lorsque l'énergie gamma totale mesurée Eₛᵤₘ est au-dessus de 2,614 MeV, l'appareil (100, 200, 300) étant **caractérisé en ce**
- **que** le scintillateur de rayons gamma (101, 201, 301) comprend un matériau inorganique avec une longueur d'atténuation Lg de moins de 10 cm, de préférence de moins de 5 cm pour des rayons gamma d'une énergie de 5 MeV pour fournir un pouvoir d'arrêt de rayons gamma de haute énergie pour des rayons gamma énergétiques à l'intérieur du scintillateur de rayons gamma,
- le scintillateur de rayons gamma (101, 201, 301) comprenant des composants avec un produit de section de capture de neutrons et de concentration entraînant une longueur d'absorption Lₙ pour des neutrons thermiques qui est plus grande que 0,5 cm mais plus petite que cinq fois la longueur d'atténuation Lg, de préférence plus petite que deux fois la longueur d'atténuation Lg pour des rayons gamma de 5 MeV dans ledit scintillateur, les composants d'absorption de neutrons du scintillateur de rayons gamma (101, 201, 301) libérant l'énergie déployée dans les noyaux atomiques excités après la capture de neutrons principalement par rayonnement gamma,
- le scintillateur de rayons gamma (101, 201, 301) ayant un diamètre ou une longueur de bord d'au moins 50% de Lg, de préférence d'au moins Lg, pour absorber une partie essentielle de l'énergie des rayons gamma libérée après la capture des neutrons dans le scintillateur.

2. Appareil selon la revendication précédente dans lequel l'unité d'évaluation est configurée pour classifier le rayonnement détecté comme des neutrons lorsque l'énergie gamma totale mesurée est de plus en dessous d'un seuil prédéterminé, de préférence en dessous de 10 MeV.

3. Appareil selon la revendication 1, le scintillateur de rayons gamma (101, 201, 301) comprenant au moins l'un des éléments chlore (Cl), manganèse (Mn), cobalt (Co), sélénium (Se), brome (Br), iode (I), césium (Cs), praséodymium (Pr), lanthane (La), holmium (Ho), ytterbium (Y), lutétium (Lu), hafnium (Hf), tantale (Ta), tungstène (W) ou mercure (Hg) comme constituant.

4. Appareil selon la revendication précédente dans lequel le scintillateur de rayons gamma (101, 201, 301) est sélectionné dans le groupe tungstate de plomb (PWO), iodure de sodium (NaI), iodure de césium (CsI) ou bromure de lanthane (LaBr₃).

5. Appareil selon la revendication 1, le scintillateur de rayons gamma (101, 201, 301) comprenant au moins l'un des éléments cadmium (Cd), samarium (Sm), dysprosium (Dy), europium (Eu), gadolinium (Gd), iridium (Ir), indium (In) ou mercure (Hg) comme activateur ou dopant.

6. Appareil selon la revendication précédente dans lequel le scintillateur de rayons gamma (101, 201, 301) est sélectionné dans un groupe d'iodure de strontium dopé à l'europium (SrI₂) ou fluorure de calcium (CaF₂).

7. Appareil selon la revendication 1 dans lequel le scintillateur de rayons gamma (101, 201, 301) est divisé en au moins trois parties séparées, chacune de ces parties étant couplée à un détecteur de lumière (103, 203, 303) si bien que les signaux des différentes parties peuvent être distingués, dans lequel l'unité d'évaluation est configurée pour classifier le rayonnement détecté comme des neutrons quand au moins deux parties différentes ont détecté un signal qui est du à l'interaction des rayons gamma suivant une capture de neutrons dans les composants d'absorption de neutrons du scintillateur de rayons gamma (101, 201, 301).

8. Appareil selon la revendication précédente dans lequel le détecteur de lumière (103, 203, 303) permettant de distinguer les signaux des différentes parties du scintillateur de rayons gamma (101, 201, 301) est un tube photomultiplicateur multi-anodes.

9. Appareil selon la revendication 1 dans lequel le scintillateur de rayons gamma (101, 201, 301) est au moins en partie entouré par une section de blindage (204, 304), ladite section de blindage (204, 304) comprenant un scintillateur, la lumière d'émission dudit scintillateur étant mesurée par un détecteur de lumière (205, 305), dans lequel les signaux de sortie du détecteur de lumière (205, 303) sont évalués par l'unité d'évaluation commune de l'appareil.

10. Appareil selon la revendication précédente dans lequel l'unité d'évaluation est configurée pour classifier le rayonnement détecté comme des neutrons lorsqu'aucun signal avec une énergie au-dessus d'un certain seuil de blindage n'a été détecté par le scintillateur de la section de blindage (204, 304) dans le même laps de temps (anticoïncidence), ledit seuil de blindage étant déterminé selon les étapes suivantes :
- la mesure de l'épaisseur t (en cm) du scintillateur dans la troisième section,
- la détermination de l'énergie Eₘᵢₙ (en Mev) correspondant au dépôt d'énergie des particules minimum ionisantes couvrant une distance t dans ledit scintillateur en multipliant ladite épaisseur avec la densité du matériau du scintillateur, donnée en g/cm3, et avec la perte d'énergie des particules minimum ionisantes dans ledit scintillateur, donnée en MeV (g/cm3),
- la fixation du seuil de blindage en dessous de ladite énergie.

11. Appareil selon la revendication précédente dans lequel la section de blindage (304) est couplée optiquement au détecteur de lumière (303) du scintillateur de rayons gamma (301) et dans lequel l'unité d'évaluation est configurée pour distinguer les signaux du scintillateur de rayons gamma (301) et de la section de blindage (304) par leurs propriétés de signal.

12. Appareil selon la revendication précédente dans lequel un convertisseur de longueur d'onde (307) est monté entre le scintillateur de la section de blindage (304) et le photodétecteur (303).

13. Appareil selon la revendication 9 dans lequel le scintillateur est sélectionné dans un groupe de matériaux comprenant les constituants avec le numéro atomique inférieur Z qui sert de modérateur de neutrons pour les neutrons rapides.

14. Procédé pour détecter des neutrons, de préférence des neutrons thermiques, utilisant un appareil selon la revendication 1, comprenant les étapes suivantes :
- capture d'un neutron dans le scintillateur de rayons gamma (101, 201,301),
- mesure de la lumière émise par le scintillateur de rayons gamma (101, 201, 301) comme conséquence de la perte d'énergie de rayonnement gamma,
- détermination de la perte d'énergie réelle du rayonnement gamma, suivant une capture de neutrons, de la lumière émise par le scintillateur de rayons gamma (101, 201, 301) de l'appareil (100, 200, 300) et
- classification d'un phénomène comme capture de neutrons lorsque la perte d'énergie totale mesurée est supérieure à 2,614 MeV.

15. Procédé selon la revendication précédente dans lequel un phénomène est classifié de capture de neutrons seulement lorsque la perte d'énergie totale mesurée est inférieure à un seuil prédéterminé, de préférence en dessous de 10 MeV.
